# EUROPEAN PATENT SPECIFICATION

(11) **EP 3 369 984 B1**
(45) Date of publication and mention of the grant of the patent: **18.03.2020**
(21) Application number: 16859658.3
(22) Date of filing: 19.10.2016
(51) Int. Cl.: F17C 3/08, F16L 59/065

(54) **VACUUM HEAT INSULATION STRUCTURE**
VAKUUMWÄRMEISOLIERUNGSSTRUKTUR
STRUCTURE D'ISOLATION THERMIQUE SOUS VIDE

(30) Priority: 29.10.2015 JP 2015212733
(43) Date of publication of application: 05.09.2018
(73) Proprietor: Kawasaki Jukogyo Kabushiki Kaisha, Kobe-shi, Hyogo 650-8670 (JP)
(72) Inventor: YAMASHIRO, Kazuto, Kobe-shi, Hyogo 650-8670 (JP); NAKADO, Hiroki, Kobe-shi, Hyogo 650-8670 (JP); IMAI, Tatsuya, Kobe-shi, Hyogo 650-8670 (JP); MURAGISHI, Osamu, Kobe-shi, Hyogo 650-8670 (JP); URAGUCHI, Ryosuke, Kobe-shi, Hyogo 650-8670 (JP); KOUMOTO, Takashi, Kobe-shi, Hyogo 650-8670 (JP)
(74) Representative: Dehns
(86) International application number: PCT/JP2016/080962
(87) International publication number: WO 2017/073428

(56) References cited:
- WO-A1-2014/174819
- JP-A- 2014 074 452
- JP-U- S63 198 899

## Description

### Technical Field

The present invention relates to a vacuum thermal insulating structure.

### Background Art

Conventionally, there are known vacuum thermal insulating structures, in which a low-temperature-side first member and a high-temperature-side second member face each other with a vacuum space formed therebetween. Generally speaking, in such a vacuum thermal insulating structure, the first member is covered by a multilayer vacuum insulating member in order to prevent entry of heat due to heat radiation from the second member to the first member.

For example, Patent Literature 1 discloses a double-shell tank, in which a plurality of tubular members are disposed in a vacuum space formed between an inner shell (a low-temperature-side first member) and an outer shell (a high-temperature-side second member), and the inner shell is supported by the outer shell via the tubular members.

### Citation List

### Patent Literature

PTL 1: WO 2014/174819

### Summary of Invention

### Technical Problem

In a case where the tubular members are disposed in the vacuum space as described above, it is desired that the entry of heat due to heat radiation from the second member to the first member be prevented also inside each tubular member. In order to do so, it is conceivable to cover the first member inside each tubular member by a planar multilayer vacuum insulating member, and also cover the inner peripheral surface of each tubular member by a cylindrical multilayer vacuum insulating member.

Usually, such a multilayer vacuum insulating member is wound around the outside of an object to be insulated, and held on the object by tensile force. However, in a case where the inner peripheral surface of the tubular member is covered by the cylindrical multilayer vacuum insulating member as described above, how to keep the cylindrical multilayer vacuum insulating member in position along the inner peripheral surface of the tubular member is a problem to be solved.

In view of the above, an object of the present invention is to provide a vacuum thermal insulating structure capable of keeping a cylindrical multilayer vacuum insulating member in position along the inner peripheral surface of a tubular member.

### Solution to Problem

In order to solve the above described problem, a vacuum thermal insulating structure according to the present invention includes: a first member; a second member facing the first member with a vacuum space formed between the second member and the first member, the second member having a higher temperature than the first member; a tubular member extending from the first member toward the second member; a planar first multilayer vacuum insulating member that covers the first member inside the tubular member; a cylindrical second multilayer vacuum insulating member that covers an inner peripheral surface of the tubular member; and a holding member disposed inside the tubular member, with the second multilayer vacuum insulating member wound around the holding member.

According to the above configuration, the second multilayer vacuum insulating member, which covers the inner peripheral surface of the tubular member, is wound around the holding member. Therefore, the second multilayer vacuum insulating member can be kept in position along the inner peripheral surface of the tubular member by means of the holding member.

The holding member may include: a first holding portion, on which the first multilayer vacuum insulating member is placed; and a second holding portion, around which the second multilayer vacuum insulating member is wound. This configuration makes it possible to hold the first multilayer vacuum insulating member by utilizing the holding member without requiring stud bolts or the like to be provided on the first member.

The holding member may be a container-shaped member with an opening facing the second member, and the first holding portion may serve as a ceiling wall and the second holding portion may serve as a peripheral wall. This configuration makes it possible to simplify the shape of the holding member.

The tubular member may be in contact with the second member. The tubular member may be made of a material whose thermal conductivity is lower than 1 W/m•K. A distance from one end of the second multilayer vacuum insulating member at the second member side to one end of the tubular member at the second member side may be not more than 1/2 and not less than 1/6 of a length of the tubular member. The multilayer vacuum insulating members tend to allow heat to be readily transferred therethrough in a direction orthogonal to the thickness direction (multilayer-stacking direction). Meanwhile, since the thermal conductivity of the tubular member is low, a temperature gradient is formed in the tubular member, in which the temperature gradually decreases from the one end at the second member side toward the other end at the first member side. In such a configuration, if the second multilayer vacuum insulating member extends to the immediate vicinity of the second member, the second multilayer vacuum insulating member acts as a detouring path for heat, through which heat is transferred in a manner to detour the middle part of the tubular member. On the other hand, if the length of the second multilayer vacuum insulating member is too short, a large portion of the inner peripheral surface of the tubular member is exposed. As a result, a large amount of heat enters the first member via the tubular member due to heat radiation. In this respect, if the distance from the one end of the second multilayer vacuum insulating member at the second member side to the one end of the tubular member at the second member side is not more than 1/2 and not less than 1/6 of the length of the tubular member, the inner peripheral surface of the tubular member can be covered over a sufficient area, and the second multilayer vacuum insulating member can be effectively suppressed from acting as a detouring path for heat, through which heat is transferred in a manner to detour the middle part of the tubular member.

For example, the first member and the second member may be an inner shell and an outer shell of a double-shell tank, respectively.

For example, the double-shell tank may be a ship tank mounted on a ship.

### Advantageous Effects of Invention

The present invention makes it possible to keep the cylindrical multilayer vacuum insulating member in position along the inner peripheral surface of the tubular member.

### Brief Description of Drawings

Fig. 1 is a sectional view of a double-shell tank, in which a vacuum thermal insulating structure according to one embodiment of the present invention is adopted.
Fig. 2 is a sectional view of one tubular member in the double-shell tank shown in Fig. 1.
Fig. 3 is a perspective view of a holding member in the one embodiment.
Fig. 4 is a perspective view of a holding member in one variation.

### Description of Embodiments

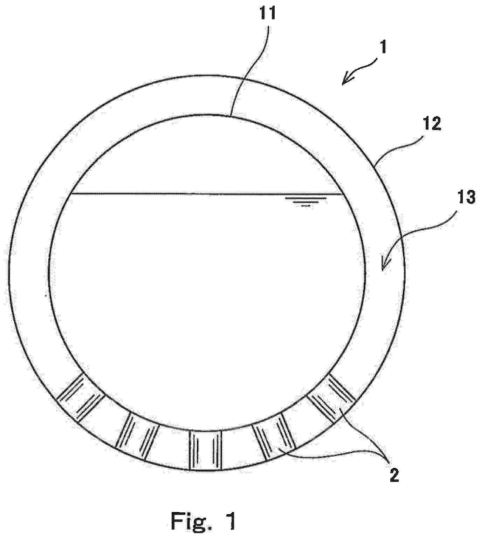

Fig. 1 shows a double-shell tank 1, in which a vacuum thermal insulating structure according to one embodiment of the present invention is adopted. The double-shell tank 1 is, for example, a ship tank mounted on a ship. However, the double-shell tank 1 need not be a ship tank, but may be, for example, a tank installed on the ground.

Specifically, the double-shell tank 1 includes an inner shell 11 and an outer shell 12, which face each other with a vacuum space 13 formed therebetween. The inner shell 11 corresponds to a first member of the present invention, and the outer shell 12 corresponds to a second member of the present invention.

The inner shell 11 stores therein, for example, a low-temperature liquefied gas. The outer shell 12 surrounding the inner shell 11 is exposed to the atmosphere. That is, the temperature of the outer shell 12 is an ordinary temperature higher than the temperature of the inner shell 11. The vacuum space 13 serves to prevent thermal transfer due to air convection between the inner shell 11 and the outer shell 12.

A plurality of tubular members 2 are disposed between the inner shell 11 and the outer shell 12. Each tubular member 2 extends from the inner shell 11 toward the outer shell 12, and is in contact with the outer shell 12. The inner shell 11 is supported by the outer shell 12 via the tubular members 2.

In the present embodiment, the inner shell 11 is circular cylindrical and extends in a direction orthogonal to the plane of Fig. 1. For this reason, the tubular members 2 form two rows that are spaced apart from each other in the axial direction of the inner shell 11, and in each row, the tubular members 2 are arranged on a line that extends in the circumferential direction of the inner shell 11. The axial direction of each tubular member 2 coincides with the radial direction of the inner shell 11. However, the manner in which the tubular members 2 are arranged can be suitably changed in accordance with the shape of the inner shell 11. As one example, in a case where the inner shell 11 is spherical, the tubular members 2 may be arranged in two directions that are orthogonal to each other, such that the tubular members 2 are arranged in a cruciform and the point of intersection of these two directions is the lowermost end of the inner shell 11. As another example, in a case where the inner shell 11 is rectangular, the tubular members 2 may be arranged in a matrix form between the bottom of the inner shell 11 and the bottom of the outer shell 12.

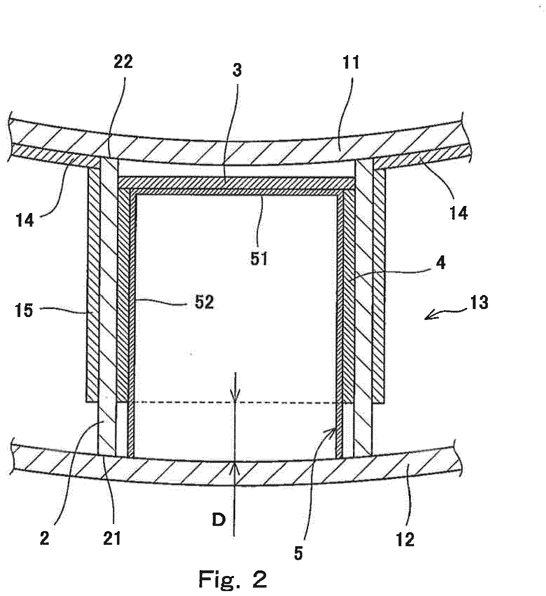

As shown in Fig. 2, in the present embodiment, each tubular member 2 is in direct contact with the inner shell 11 and the outer shell 12. However, as an alternative, different members may be fitted to one end and the other end, respectively, of each tubular member 2, and the tubular member 2 may be in contact with the inner shell 11 and the outer shell 12 via these members.

In the present embodiment, each tubular member 2 has a circular sectional shape. However, as an alternative, each tubular member 2 may have a different sectional shape, such as a polygonal shape.

In the present embodiment, each tubular member 2 is made of a material whose thermal conductivity at ordinary temperatures is lower than 1 W/m•K. Examples of such a material include glass fiber reinforced plastic (GFRP), carbon fiber reinforced plastic (CFRP), and fiber reinforced plastic (FRP) such as fabric reinforced phenolic resin.

Outside each tubular member 2, the inner shell 11 is covered by a plurality of planar outer first multilayer vacuum insulating members 14, and the outer peripheral surface of each tubular member 2 is covered by a cylindrical outer second multilayer vacuum insulating member 15. Meanwhile, inside each tubular member 2, the inner shell 11 is covered by a planar inner first multilayer vacuum insulating member 3, and the inner peripheral surface of each tubular member 2 is covered by a cylindrical inner second multilayer vacuum insulating member 4.

Each of the multilayer vacuum insulating members 14, 15, 3, and 4 has, for example, a structure in which radiation shield films and spacers are stacked alternately. Each radiation shield film is formed, for example, by vapor-depositing aluminum (alternatively, gold or silver) on the surface of a resin sheet. Each spacer is a sheet with low thermal conductivity. Examples of such a sheet include a resin net, a resin woven fabric, a resin nonwoven fabric, paper, and a glass fiber material.

The outer first multilayer vacuum insulating members 14 are wound around the inner shell 11, such that end portions of the outer first multilayer vacuum insulating members 14 that are adjacent to each other overlap each other. The end portions of the adjacent outer first multilayer vacuum insulating members 14 are joined together by a hook-and-loop fastener. The outer first multilayer vacuum insulating members 14 may be held on the inner shell 11 by tensile force, or may be held on the inner shell 11 by utilizing stud bolts provided on the inner shell 11, or may be held on the inner shell 11 by a ring-shaped band.

The outer second multilayer vacuum insulating member 15 is wound around the tubular member 2, such that end portions of the outer second multilayer vacuum insulating member 15 overlap each other. The end portions of the outer second multilayer vacuum insulating member 15 are joined together by a hook-and-loop fastener, such that tensile force is exerted on the outer second multilayer vacuum insulating member 15, and by the tensile force, the outer second multilayer vacuum insulating member 15 is held on the outer peripheral surface of the tubular member 2. The length of the outer second multilayer vacuum insulating member 15 is less than the length of the tubular member 2, and the lower part of the outer peripheral surface of the tubular member 2 is exposed. However, as an alternative, the outer peripheral surface of the tubular member 2 may be entirely covered by the outer second multilayer vacuum insulating member 15.

A holding member 5 is disposed inside each tubular member 2. The holding member 5 includes: a first holding portion 51, on which the inner first multilayer vacuum insulating member 3 is placed; and a second holding portion 52, around which the inner second multilayer vacuum insulating member 4 is wound.

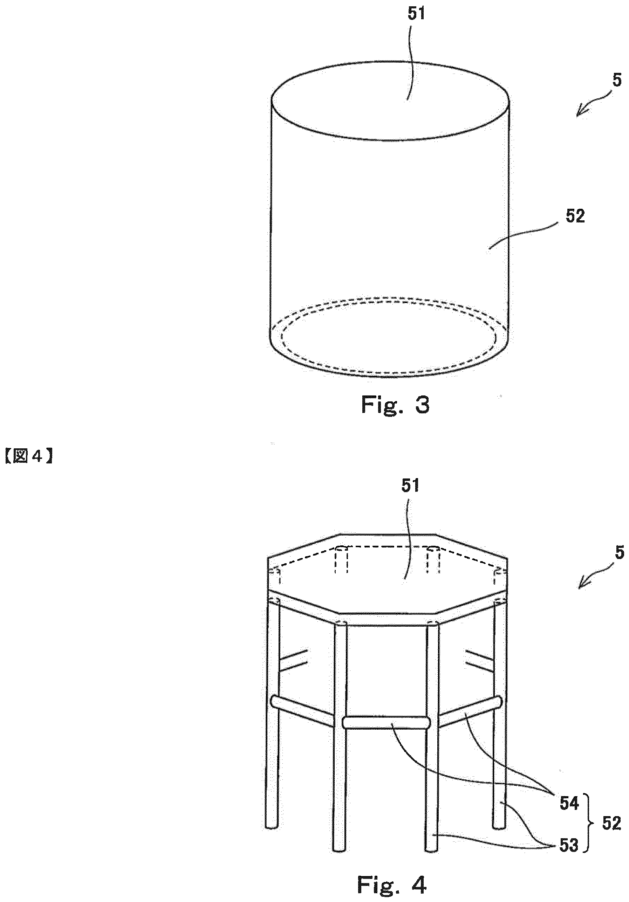

In the present embodiment, as shown in Fig. 3, the holding member 5 is a container-shaped member with an opening facing the outer shell 12, and the first holding portion 51 serves as a ceiling wall and the second holding portion 52 serves as a peripheral wall. To be more specific, the first holding portion 51 serving as the ceiling wall has a circular shape, and the second holding portion 52 serving as the peripheral wall has a circular cylindrical shape. It should be noted that each of the ceiling wall and the peripheral wall may be a continuous plate as shown in Fig. 3, or may be a plate with a large number of holes formed therein (e.g., perforated metal or expanded metal).

The configuration of the holding member 5 can be suitably changed. For example, as shown in Fig. 4, the first holding portion 51 serving as the ceiling wall may have a polygonal shape. Also, the second holding portion 52 may be formed by: a plurality of vertical rods 53 arranged along the outline of the first holding portion 51 serving as the ceiling wall; and a plurality of horizontal rods 54 coupling these vertical rods 53 together. Alternatively, although not illustrated, the first holding portion 51 may be formed by two rods that are arranged in a cruciform, or may be formed by four or more rods that are arranged in a lattice form.

In the present embodiment, as shown in Fig. 2, the height of the holding member 5 is set to be less than the length of the tubular member 2. In a state where the holding member 5 is in contact with the outer shell 12, the holding member 5 is coupled to the tubular member 2 by a pin that is not shown. For this reason, the inner first multilayer vacuum insulating member 3 is slightly spaced apart from the inner shell 11. However, as an alternative, the entire inner first multilayer vacuum insulating member 3 may be in close contact with the inner shell 11. As another alternative, the holding member 5 may be coupled to the tubular member 2 in a state where the holding member 5 is lifted from the outer shell 12. The inner first multilayer vacuum insulating member 3 may be fixed to the first holding portion 51, or may be simply placed on the first holding portion 51 without being fixed to the first holding portion 51.

The inner second multilayer vacuum insulating member 4 is wound around the second holding portion 52 of the holding member 5, such that end portions of the inner second multilayer vacuum insulating member 4 overlap each other. The end portions of the inner second multilayer vacuum insulating member 4 are joined together by a hook-and-loop fastener, such that tensile force is exerted on the inner second multilayer vacuum insulating member 4, and by the tensile force, the inner second multilayer vacuum insulating member 4 is held on the outer peripheral surface of the tubular member 2.

Although the inner second multilayer vacuum insulating member 4 may be in close contact with the inner peripheral surface of the tubular member 2, it is desirable that the inner second multilayer vacuum insulating member 4 be positioned in close proximity to the inner peripheral surface of the tubular member 2, but slightly spaced apart from the inner peripheral surface. For this reason, it is desirable that the external diameter of the second holding portion 52 serving as the peripheral wall be less than the internal diameter of the tubular member 2 by a dimension that is slightly greater than the twice of the thickness of the inner second multilayer vacuum insulating member 4. It should be noted that the position of the holding member 5 relative to the tubular member 2 is fixed by the aforementioned unshown pin (i.e., the pin that couples the holding member 5 and the tubular member 2 together).

The length of the inner second multilayer vacuum insulating member 4 is less than the length of the tubular member 2, and the lower part of the inner peripheral surface of the tubular member 2 is exposed. A distance D from the lower end of the inner second multilayer vacuum insulating member 4 (i.e., one end at the outer shell 12 side) to the lower end 21 of the tubular member 2 (i.e., one end at the outer shell 12 side) is not more than 1/2 and not less than 1/6 of the length of the tubular member 2.

Desirably, the upper end of the inner second multilayer vacuum insulating member 4 (i.e., the other end at the inner shell 11 side) is in contact with the inner first multilayer vacuum insulating member 3. However, the upper end of the inner second multilayer vacuum insulating member 4 may be slightly spaced apart from the inner first multilayer vacuum insulating member 3. Alternatively, the inner first multilayer vacuum insulating member 3 and the inner second multilayer vacuum insulating member 4 may be integrated together.

As described above, in the vacuum thermal insulating structure according to the present embodiment, the inner second multilayer vacuum insulating member 4, which covers the inner peripheral surface of the tubular member 2, is wound around the holding member 5. Therefore, the inner second multilayer vacuum insulating member 4 can be kept in position along the inner peripheral surface of the tubular member 2 by means of the holding member 5.

Moreover, the holding member 5 includes not only the second holding portion 52, around which the inner second multilayer vacuum insulating member 4 is wound, but also the first holding portion 51, on which the inner first multilayer vacuum insulating member 3 is placed. This makes it possible to hold the inner first multilayer vacuum insulating member 3 by utilizing the holding member 5 without requiring stud bolts or the like to be provided on the inner shell 11.

In the present embodiment, the holding member 5 is container-shaped. This makes it possible to simplify the shape of the holding member 5.

The multilayer vacuum insulating members tend to allow heat to be readily transferred therethrough in a direction orthogonal to the thickness direction (multilayer-stacking direction). Meanwhile, since the thermal conductivity of the tubular member 2 is low, a temperature gradient is formed in the tubular member 2, in which the temperature gradually decreases from the lower end at the outer shell 12 side toward the upper end at the inner shell 11 side. In such a configuration, if the inner second multilayer vacuum insulating member 4 extends to the immediate vicinity of the outer shell 12, the inner second multilayer vacuum insulating member 4 acts as a detouring path for heat, through which heat is transferred from the lower part to the upper part of the tubular member 2 in a manner to detour the middle part of the tubular member 2. On the other hand, if the length of the inner second multilayer vacuum insulating member 4 is too short, a large portion of the inner peripheral surface of the tubular member 2 is exposed. As a result, a large amount of heat enters the inner shell 11 via the tubular member 2 due to heat radiation. In this respect, if the distance D from the lower end of the inner second multilayer vacuum insulating member 4 to the lower end of the tubular member 2 is not more than 1/2 and not less than 1/6 of the length of the tubular member 2 as in the present embodiment, the inner peripheral surface of the tubular member 2 can be covered over a sufficient area, and the inner second multilayer vacuum insulating member 4 can be effectively suppressed from acting as a detouring path for heat, through which heat is transferred in a manner to detour the middle part of the tubular member 2.

### (Variations)

The present invention is not limited to the above-described embodiment. Various modifications can be made without departing from the spirit of the present invention.

For example, the first member and the second member of the present invention need not be the inner shell 11 and the outer shell 12 of the double-shell tank 1. For example, the first member may be a low-temperature plate that protrudes from the inner shell 11, and the second member may be a high-temperature plate that protrudes from the outer shell 12 in a manner to face the low-temperature plate.

The tubular members 2 need not be in contact with the second member, but may be spaced apart from the second member. Moreover, each tubular member 2 need not be made of a material whose thermal conductivity at ordinary temperatures is lower than 1 W/m•K. In a case where thermal conduction by the tubular member 2 is low (e.g., a case where the length of the tubular member 2 is great), the tubular member 2 may be made of a metal with high thermal conductivity.

The holding member 5 need not include the first holding portion 51. For example, the inner first multilayer vacuum insulating member 3 may be held by utilizing stud bolts provided on the inner shell 11.

In a case where the thickness of the inner second multilayer vacuum insulating member 4 is reduced downward, the inner second multilayer vacuum insulating member 4 may entirely cover the inner peripheral surface of the tubular member 2.

### Industrial Applicability

The present invention is applicable not only to tanks but also to other various structures.

### Reference Signs List

- 1: double-shell tank
- 11: inner shell (first member)
- 12: outer shell (second member)
- 13: vacuum space
- 2: tubular member
- 3: inner first multilayer vacuum insulating member
- 4: inner second multilayer vacuum insulating member
- 5: holding member
- 51: first holding portion
- 52: second holding portion

## Claims

1. A vacuum thermal insulating structure comprising:
a first member (11);
a second member (12) facing the first member with a vacuum space (13) formed between the second member and the first member, the second member having a higher temperature than the first member;
a tubular member (2) extending from the first member toward the second member;
a planar first multilayer vacuum insulating member that covers the first member inside the tubular member;
a cylindrical second multilayer vacuum insulating member (4) that covers an inner peripheral surface of the tubular member; and
a holding member (5) disposed inside the tubular member, with the second multilayer vacuum insulating member wound around the holding member.

2. The vacuum thermal insulating structure according to claim 1, wherein
the holding member includes:
a first holding portion (51), on which the first multilayer vacuum insulating member is placed; and
a second holding portion (52), around which the second multilayer vacuum insulating member is wound.

3. The vacuum thermal insulating structure according to claim 2, wherein
the holding member is a container-shaped member with an opening facing the second member, and the first holding portion serves as a ceiling wall and the second holding portion serves as a peripheral wall.

4. The vacuum thermal insulating structure according to any one of claims 1 to 3, wherein
the tubular member is in contact with the second member,
the tubular member is made of a material whose thermal conductivity is lower than 1 W/m•K, and
a distance from one end of the second multilayer vacuum insulating member at the second member side to one end of the tubular member at the second member side is not more than 1/2 and not less than 1/6 of a length of the tubular member.

5. The vacuum thermal insulating structure according to any one of claims 1 to 4, wherein
the first member and the second member are an inner shell and an outer shell of a double-shell tank (1), respectively.

6. The vacuum thermal insulating structure according to claim 5, wherein
the double-shell tank is a ship tank mounted on a ship.

## Patentansprüche

1. Vakuum-Wärmeisolierungsstruktur, umfassend:
ein erstes Glied (11);
ein zweites Glied (12), das dem ersten Glied zugewandt ist, wobei zwischen dem zweiten Glied und dem ersten Glied ein Vakuumraum (13) gebildet ist und das zweite Glied eine höhere Temperatur als das erste Glied aufweist;
ein rohrförmiges Glied (2), das sich von dem ersten Glied hin zu dem zweiten Glied erstreckt;
ein ebenes erstes mehrschichtiges vakuumisolierendes Glied, das das erste Glied innerhalb des rohrförmigen Glieds bedeckt;
ein zylindrisches zweites mehrschichtiges vakuumisolierendes Glied (4), das eine innere Umfangsoberfläche des rohrförmigen Glieds bedeckt; und
ein Halteglied (5), das innerhalb des rohrförmigen Glieds angeordnet ist, wobei das zweite mehrschichtige vakuumisolierende Glied um das Halteglied herum gewickelt ist.

2. Vakuum-Wärmeisolierungsstruktur nach Anspruch 1, wobei
das Halteglied einschließt:
einen ersten Halteabschnitt (51), auf dem das erste mehrschichtige vakuumisolierende Glied platziert ist; und
einen zweiten Halteabschnitt (52), um den herum das zweite mehrschichtige vakuumisolierende Glied gewickelt ist.

3. Vakuum-Wärmeisolierungsstruktur nach Anspruch 2, wobei
das Halteglied ein behälterförmiges Glied mit einer Öffnung ist, die dem zweiten Glied zugewandt ist, und der erste Halteabschnitt als eine Deckenwand dient und der zweite Halteabschnitt als eine Umfangswand dient.

4. Vakuum-Wärmeisolierungsstruktur nach einem der Ansprüche 1 bis 3, wobei
das rohrförmige Glied mit dem zweiten Glied in Kontakt ist,
das rohrförmige Glied aus einem Material hergestellt ist, dessen Wärmeleitfähigkeit geringer als 1 W/m·K ist, und
ein Abstand von einem Ende des zweiten mehrschichtigen vakuumisolierenden Glieds auf der Seite des zweiten Glieds zu einem Ende des rohrförmigen Glieds auf der Seite des zweiten Glieds nicht mehr als 1/2 und nicht weniger als 1/6 einer Länge des rohrförmigen Glieds beträgt.

5. Vakuum-Wärmeisolierungsstruktur nach einem der Ansprüche 1 bis 4, wobei
das erste Glied und das zweite Glied ein Innenmantel bzw. ein Außenmantel eines Doppelmanteltanks (1) sind.

6. Vakuum-Wärmeisolierungsstruktur nach Anspruch 5, wobei
der Doppelmanteltank ein auf einem Schiff montierter Schiffstank ist.

## Revendications

1. Structure d'isolation thermique sous vide comprenant :
un premier élément (11) ;
un second élément (12) en regard du premier élément avec un espace sous vide (13) formé entre le second élément et le premier élément, le second élément ayant une température plus élevée que le premier élément ;
un élément tubulaire (2) s'étendant du premier élément vers le second élément ;
un premier élément d'isolation sous vide multicouche planaire qui recouvre le premier élément à l'intérieur de l'élément tubulaire ;
un second élément d'isolation sous vide multicouche cylindrique (4) qui recouvre une surface périphérique interne de l'élément tubulaire ;
un élément de retenue (5) disposé à l'intérieur de l'élément tubulaire, avec le second élément d'isolation sous vide multicouche enroulé autour de l'élément de retenue.

2. Structure d'isolation thermique sous vide selon la revendication 1, dans laquelle l'élément de retenue inclut :
une première partie de retenue (51) sur laquelle le premier élément d'isolation sous vide multicouche est placé ; et
une seconde partie de retenue (52) autour de laquelle le second élément d'isolation sous vide multicouche est enroulé.

3. Structure d'isolation thermique sous vide selon la revendication 2, dans laquelle :
l'élément de retenue est un élément en forme de récipient avec une ouverture en regard du second élément et la première partie de retenue sert de paroi de plafond et la seconde partie de retenue sert de paroi périphérique.

4. Structure d'isolation thermique sous vide selon l'une quelconque des revendications 1 à 3, dans laquelle :
l'élément tubulaire est en contact avec le second élément,
l'élément tubulaire est constitué d'un matériau dont la conductibilité thermique est inférieure à 1 W/m·K et
une distance depuis une extrémité du second élément d'isolation sous vide multicouche du côté du second élément jusqu'à une extrémité de l'élément tubulaire du côté du second élément n'est pas supérieure à 1/2 et pas inférieure à 1/6 d'une longueur de l'élément tubulaire.

5. Structure d'isolation thermique sous vide selon l'une quelconque des revendications 1 à 4, dans laquelle :
le premier élément et le second élément sont une coque interne et une coque externe d'un réservoir à double coque (1), respectivement.

6. Structure d'isolation thermique sous vide selon la revendication 5, dans laquelle :
le réservoir à double coque est un réservoir monté sur un bateau.
